# EUROPÄISCHE PATENTSCHRIFT

(11) **EP 2 283 716 B1**
(45) Veröffentlichungstag und Bekanntmachung des Hinweises auf die Patenterteilung: **28.03.2012**
(21) Anmeldenummer: 09757211.9
(22) Anmeldetag: 28.05.2009
(51) Int. Cl.: H05K 1/02, G01R 31/3163

(54) **ELEKTRONISCHES GERÄT UND VERFAHREN ZUM UNTERSUCHEN EINER LEITERPLATTE**
ELECTRONIC DEVICE AND METHOD FOR TESTING A CIRCUIT BOARD
APPAREIL ÉLECTRONIQUE ET PROCÉDÉ DE CONTRÔLE D'UNE CARTE DE CIRCUITS IMPRIMÉS

(30) Priorität: 02.06.2008 DE 102008026276
(43) Veröffentlichungstag der Anmeldung: 16.02.2011
(73) Patentinhaber: Sartorius Weighing Technology GmbH, 37075 Göttingen (DE)
(72) Erfinder: WEITEMEIER, Swen, 37139 Lödingsen (DE); OLDENDORF, Christian, 37077 Göttingen (DE)
(74) Vertreter: Schneider, Peter Christian
(86) Internationale Anmeldenummer: PCT/EP2009/003785
(87) Internationale Veröffentlichungsnummer: WO 2009/146828

(56) Entgegenhaltungen:
- EP-A- 0 436 891
- EP-A- 1 804 560
- DE-C1- 3 602 960
- JP-A- 2005 156 212
- JP-A- 2005 221 398
- JP-A- 2008 026 217
- US-A- 5 588 202
- US-A1- 2005 117 314
- US-A1- 2006 195 705

## Beschreibung

### Gebiet der Erfindung

Die Erfindung bezieht sich auf ein elektronisches Gerät, umfassend
- eine Leiterplatte, die einen Satz von Eingangskontakten, einen Satz von Ausgangskontakten und eine zwischen den Eingangskontakten einerseits und den Ausgangskontakten andererseits angeschlossene, elektrische Schaltung aufweist, sowie
- eine Steuereinheit.

Die Erfindung bezieht sich weiter auf ein Verfahren zum Untersuchen einer Leiterplatte, die einen Satz von Eingangskontakten, einen Satz von Ausgangskontakten und eine zwischen den Eingangskontakten einerseits und den Ausgangskontakten andererseits angeschlossene, elektrische Schaltung aufweist, umfassend die Schritte:
a) Anlegen eines vorgegebenen Testsignals an dem Satz von Eingangskontakten,
b) Abgreifen eines Antwortsignals an dem Satz von Ausgangskontakten,
c) Durchführen einer Signalanalyse des Antwortsignals.

### Stand der Technik

Die Produktpiraterie, auch im Bereich hochwertiger elektronischer Geräte, ist in ständigem Wachstum begriffen. Insbesondere die mit elektronischen Komponenten bestückten Leiterplatten derartiger Geräte sind oft leicht kopierbar und in Billiglohnländern zu konkurrenzlos günstigen Preisen herstellbar. Daraus entsteht den Herstellern der Originalgeräte und Originalplatinen ein immenser Schaden. Gewerbliche Schutzrechte greifen hier häufig nicht, da die meisten Platinen ein im Hinblick auf ihre spezielle verwendung für den Fachmann nahe liegendes Platinendesign aufweisen.

Viele Originalhersteller begegnen diesem Trend mit einer vermeintlich schwer nachahmbaren, optischen Markierung ihrer Platinen, beispielsweise durch Hologramm-Aufkleber. Abgesehen von der grundsätzlich bestehenden Möglichkeit, Aufkleber zu entfernen, stellen die Hologramme zwar eine gewisse Hürde für Nachahmer dar; sie sind jedoch mit entsprechendem Aufwand durchaus kopierbar oder zumindest hochgradig ähnlich nachahmbar. In jedem Fall erreichen derartige Schutzmaßnahmen jedoch nur diejenigen Verbraucher, die auf die verwendung von originalteilen Wert legen. Verbraucher, die gezielt billigere Kopien verwenden möchten, werden von einem solchen Kopierschutz nicht erreicht.

Zum Kopieren der elektronischen Funktion einer Leiterplatte kann deren sichtbare Bestückung übernommen werden. Um die interne Verdrahtung zu rekonstruieren, ist es bekannt, die Anschlüssen der Leiterplatten paarweise mit einem Gleichspannungssignal zu belegen und die Verbindung jedes Anschlusses mit allen anderen Anschlüssen und/oder Testpunkten auf der Platine mit einer Durchgangsmessung zu prüfen.

Bei einem komplexeren Verfahren, wie es in der gattungsbildenden JP 11026747 AA offenbart ist, wird ein definiertes Testsignal an einem Paar von Eingangskontakten eingeleitet und ein resultierendes Ausgangssignal an einem Paar von Ausgangskontakten abgegriffen. Dabei ist es möglich, dass ein Eingangskontakt mit einem Ausgangskontakt identisch ist und daher insgesamt drei Testkontakte verwendet werden. Es ist jedoch auch denkbar, dass der Satz von Eingangskontakten und/oder der Satz von Ausgangskontakten mehr als je zwei Kontakte umfassen. Diese Variante, die von der vorliegenden Erfindung mit umfasst sein soll, ist in der genannten Druckschrift jedoch nicht offenbart. Bei geeigneter Durchführung des Tests und logischer Analyse lassen sich auf diese Weise auch elektronische Funktionen einer ggf. bestückten Leiterplatte analysieren und anschließend auf einer Kopie in Hardware oder numerisch in Software simulieren. Derartigen Plagiaten kann durch die bekannten Kopierschutzverfahren nicht wirksam begegnet werden.

Aus dem Bereich der Kartenlesegeräte, d.h. Geräte, die Informationen von bzw. auf sog. IC-Karten, die als Speichermedium und/oder Berechtigungsausweis fungieren, zu lesen bzw. zu schreiben, ist es bekannt, zur Erkennung des Karten-Standards eine standardisierte Erkennungs-Kommunikation zwischen dem Lesegerät und aktiven Komponenten der Kartenschnittstelle aufzubauen und zu analysieren. Ziel der Kommunikation ist es, es dem Lesegerät den jeweils vorliegenden Schnittstellenstandard möglichst vollständig zu offenbaren, um es dem Lesegerät zu ermöglichen, die der konkreten Schnittstelle angemessenen Protokolle zu wählen und zu verwenden. Beispiele für derartige Geräte sind in der WO 01/06443 A1 sowie der EP 1 607 899 B1 offenbart.

Aus der EP 436 891 A2 ist ein elektronisches Gerät bekannt, umfassend
- eine Leiterplatte, die einen Satz von Eingangskontakten, einen Satz von Ausgangskontakten und eine zwischen den Eingangskontakten einerseits und den Ausgangskontakten andererseits angeschlossene, elektrische Schaltung aufweist, sowie
- eine Steuereinheit,
   wobei die Steuereinheit wenigstens einmal während des bestimmungsgemäßen Betriebs des Gerätes
- ein vorgegebenes Testsignal an dem Satz von Eingangskontakten anlegt,
- ein Antwortsignal an dem Satz von Ausgangskontakten abgreift,
- ein Antwortsignal misst,
- ein Ergebnis der Signalanalyse mit einem in einem Speicher der Steuereinheit konstanten Referenzwert vergleicht und
- im Fall einer fehlenden Übereinstimmung des Signalanalyseergebnisses mit dem Referenzwert die weitere Stromversorgung des Gerätes nicht einschaltet.

Aus der EP 1 804 560 A2 ist ein Elektronik-Sicherheitsmodul bekannt, welches eine kapazitive Öffnungsüberwachung seines sicherheitsrelevanten Bereichs aufweist. Der sicherheitsrelevante Bereich ist als ein Hohlraum zwischen zwei Leiterplatten ausgebildet. Am Rand des Hohlraums liegen sich auf den Leiterplatten in definiertem Abstand Leiterflächen gegenüber, die als Kondensator wirken. Durch eine ständige Messung der Kondensator-Kapazität wird eine ständige Abstandsüberwachung der den Hohlraum einschließenden Leiterplatten realisiert, was einer Öffnungsüberwachung des Hohlraums entspricht.

### Aufgabenstellung

Es ist die Aufgabe der vorliegenden Erfindung, einen Kopierschutz für Leiterplatten zu Verfügung zu stellen, der für Nachahmer schwerer umgehbar ist und für alle Benutzer verbindlich ist.

### Darlegung der Erfindung

Diese Aufgabe wird durch ein elektronisches Gerät gemäß Anspruch 1 sowie durch ein Verfahren gemäß Anspruch 4 gelöst.

Insbesondere ist ein elektronisches Gerät vorgesehen, umfassend
- eine Leiterplatte, die einen Satz von Eingangskontakten, einen Satz von Ausgangskontakten und eine zwischen den Eingangskontakten einerseits und den Ausgangskontakten andererseits angeschlossene, elektrische Schaltung aufweist, sowie
- einen ferromagnetischen Dorn oder einen ferromagnetischen Befestigungsstift und
- eine Steuereinheit zur Erkennung einer nicht-originalen Leiterplatte,
   wobei die Steuereinheit eingerichtet ist, wenigstens einmal während des bestimmungsgemäßen Betriebs des Gerätes
- ein vorgegebenes, als ein Impulssignal, als ein Wechselspannungssignal mit einer vorgegebenen Frequenz oder als ein Wechselspannungssignal mit einer Abfolge vorgegebener Frequenzen ausgestaltetes Testsignal an dem Satz von Eingangskontakten anzulegen,
- ein Antwortsignal an dem Satz von Ausgangskontakten abzugreifen,
- eine Signalanalyse des Antwortsignals durchzuführen,
- ein Ergebnis der Signalanalyse mit einem in einem Speicher der Steuereinheit hinterlegten Erwartungswert zu vergleichen und
- im Fall einer fehlenden Übereinstimmung des Signalanalyseergebnisses mit dem Erwartungswert einen weiteren Betrieb des Gerätes wenigstens teilweise zu deaktivieren oder nicht zu aktivieren,
wobei die elektrische Schaltung als ein passives, eine charakteristische Übertragungsfunktion aufweisendes Netzwerk mit wenigstens einem induktiv wirkenden Element ausgebildet ist, wobei als induktiv wirkendes Element ein Leiterdraht zu einer Spule um einen Durchbruch in der Leiterplatte geschlungen ist, der in Einbaulage von dem ferromagnetischen Dorn des elektronischen Gerätes oder dem ferromagnetischen Befestigungsstift durchsetzt ist, sodass der Induktivitätswert des induktiv wirkenden Elementes in Einbaulage verschieden ist von seinem Induktivitätswert im ausgebauten Zustand und dieser über die Übertragungsfunktion des passiven Netzwerks das Signalanalyseergebnis beeinflusst.

Weiter vorgesehen ist ein Verfahren zur Erkennung einer nicht-originalen Leiterplatte, die einen Satz von Eingangskontakten, einen Satz von Ausgangskontakten und eine zwischen den Eingangskontakten einerseits und den Ausgangskontakten andererseits angeschlossene, elektrische Schaltung aufweist, umfassend die Schritte:
a) Anlegen eines vorgegebenen, als ein Impulssignal, als ein Wechselspannungssignal mit einer vorgegebenen Frequenz oder als ein Wechselspannungssignal mit einer Abfolge vorgegebener Frequenzen ausgestalteten Testsignals an dem Satz von Eingangskontakten,
b) Abgreifen eines Antwortsignals an dem Satz von Ausgangskontakten,
c) Durchführen einer Signalanalyse des Antwortsignal,
wobei eine Steuereinheit vorgesehen ist, die
- die Schritte a bis c wenigstens einmal während des bestimmungsgemäßen Betriebs eines elektronischen Gerätes, dessen Bestandteile die Steuereinheit, die Leiterplatte und ein ferromagnetischer Dorn oder ein ferromagnetischer Befestigungsstift sind, durchführt,
- ein Ergebnis der Signalanalyse mit einem in einem Speicher der Steuereinheit hinterlegten Erwartungswert vergleicht und
- im Fall einer fehlenden Übereinstimmung des Signalanalyseergebnisses mit dem Erwartungswert einen weiteren Betrieb des elektronischen Gerätes wenigstens teilweise deaktiviert oder nicht aktiviert,
wobei die elektrische Schaltung als ein passives, eine charakteristische Übertragungsfunktion aufweisendes Netzwerk mit wenigstens einem induktiv wirkenden Element ausgebildet ist, wobei als induktiv wirkendes Element ein Leiterdraht zu einer Spule um einen Durchbruch in der Leiterplatte geschlungen ist, der in Einbaulage von dem ferromagnetischen Dorn des elektronischen Gerätes oder dem ferromagnetischen Befestigungsstift durchsetzt ist, sodass der Induktvitätswert des induktiv wirkenden Elementes in Einbaulage verschieden ist von seinem Induktivitätswert im ausgebauten Zustand und dieser über die Übertragungsfunktion des passiven Netzwerks das Signalanalyseergebnis beeinflusst.

Bevorzugte Ausführungsformen der vorliegenden Erfindung sind Gegenstand der abhängigen Ansprüche.

Grundgedanke der Erfindung ist es, in den bestimmungsgemäßen Betriebsablauf eines Gerätes, welches mit der kopiergeschützten Leiterplatte wechselwirkt und in welches die kopiergeschützte Leiterplatte vorzugsweise integriert ist, eine Leiterplatten-Testprozedur einzubauen, die vorzugsweise vom Benutzer nicht bemerkt wird. Diese Prozedur kann etwa im Rahmen einer Initialisierungsroutine, die z.B. bei jedem Neustart des Gerätes oder beim Aufruf eines die zu prüfende Leiterplatte benutzenden Programms durchgeführt wird, in eine Software, die den Betrieb des elektronischen Gerätes steuert, eingebaut werden. Auch längerfristige Testprozeduren, die z.B. mehrere Inbetriebnahmen des Gerätes erfordern, Tests zu einem vorgegebenen oder zufällig gewählten Zeitpunkt während des laufenden Betriebs oder sporadische Tests, die nicht bei jedem Betrieb sondern nur gelegentlich durchgeführt werden, können realisiert sein. Dies erschwert die Erkenntnis des Zusammenhangs zwischen der Benutzung einer gefälschten Platine und dem Abbruch des Gerätebetriebs.

Vorzugsweise ist ein Mikroprozessor das dabei aktive Element. Ein solcher Mikroprozessor wird als typisches Kernelement einer Steuereinheit elektronischer Geräte verwendet. Er ist mit seinen Ein- und Ausgängen mit den Anschlüssen der von ihm zu steuernden Leiterplatten verbunden. Es ist daher unschwer, den Mikroprozessor so anzusteuern, dass er an definierte Eingangsanschlüsse der zu testenden Leiterplatte ein vorgegebenes Testsignal ausgibt und an zwei Ausgängen ein resultierendes Antwortsignal empfängt. Bei einer besonderen Ausführungsform der Erfindung ist die Steuereinheit, insbesondere der Mikroprozessor, auf der Platine selbst angeordnet.

Das typischerweise analoge Antwortsignal wird vorzugsweise digitalisiert und geeignet analysiert. Als Testsignal eignet sich vorzugsweise ein Impulssignal oder ein Wechselspannungssignal mit einer vorgegebenen Frequenz oder ein Wechselspannungssignal mit einer Abfolge vorgegebener Frequenzen. Der Vorteil des Impulssignals liegt darin, dass es nur sehr wenig zeit in Anspruch nimmt und gleichzeitig eine Vielzahl von Frequenzen enthält, so dass das Antwortsignal eine für die Übertragungsfunktion der angeschlossenen elektrischen Schaltung charakteristische Impulsantwort darstellt. Das Antwortsignal wird in der Steuereinheit, d.h. vorzugsweise in dem Mikroprozessor nach vorgegebenen Parametern analysiert. Diese Analyse kann eine Spektralanalyse des Antwortsignals umfassen und/oder eine Bestimmung einer Phasenverschiebung im Vergleich zu dem Eingangssignal.

Das Ergebnis der Signalanalyse wird anschließend mit einem Erwartungswert verglichen, der in einem Speicher der Steuereinheit hinterlegt ist. Der Begriff des Erwartungswertes ist hier weit zu verstehen und umfasst sowohl Einzelwerte als auch Gruppen von Einzelwerten, wie beispielsweise Phasenverschiebungen und Spektralverteilungen. Entspricht das Ergebnis der Signalanalyse dem Erwartungswert, d.h. reagiert die Leiterplatte in der erwarteten weise, wird der Test als erfolgreich beendet und der bestimmungsgemäße Betrieb des elektronischen Gerätes weitergeführt. Vorzugsweise bemerkt der Benutzer davon nichts. Sollte das Ergebnis der Signalanalyse jedoch in signifikanter weise, d.h. außerhalb spezifizierter Toleranzen von dem Erwartungswert abweichen, schließt die Steuereinheit daraus, dass es sich bei der getesteten Leiterplatte nicht um ein Originalteil handelt und beendet den Betrieb des elektronischen Gerätes wenigstens teilweise. Dies kann dadurch geschehen, dass laufende Funktionen deaktiviert werden oder eine erforderliche Aktivierung für den Weiterbetrieb unterbleibt. Die Beendigung des Betriebs kann den Gesamtbetrieb des Gerätes umfassen oder lediglich einige Funktionen, z.B. solche, die speziell von Komponenten der fraglichen Leiterplatte erfüllt werden. Die Möglichkeit der Beendigung des Betriebs nur einiger Funktionen erscheint geboten, wenn aus einer vollständigen Beendigung des Betriebs Sicherheitsrisiken für den Benutzer entstehend würden. Die teilweise Deaktivierung oder Nicht-Aktivierung des Betriebs kann z.B. auch durch eine verzögerte - vollständige oder wiederum nur teilweise - Deaktivierung bzw. Nicht-Aktivierung realisiert werden.

Um einen effizienten Kopierschutz zu gewährleisten, sollten die für den Test verwendeten Eingangs- und Ausgangsanschlüsse sinnvoll gewählt werden. Dies wird dadurch gewährleistet, dass die elektrische Schaltung auf der Platine als passives, herkunftsspezifisches oder leiterplattenindividuelles Netzwerk mit Ohmschen widerständen sowie kapazitiv und/oder induktiv wirkenden Elementen ausgebildet ist. Günstiger Weise hat die für den Test verwendete elektrische Schaltung keine weitere Funktion beim Betrieb des Gerätes. Durch die individuelle Anordnung und Dimensionierung einfach auszubildender, passiver Elemente wie Kondensatoren, Spulen und Widerstände lassen sich Netzwerke aufbauen, die eine ganz charakteristische Übertragungsfunktion zeigen. Zudem sind derartige Elemente auf Leiterplatten ohne wesentlichen Kostenaufwand realisierbar. Auf diese Weise können unternehmensindividuelle oder sogar leiterplattenindividuelle Kennungen implementiert werden. Entsprechend ist der Erwartungswert im Speicher des elektronischen Gerätes zu wählen. Dieser kann beispielsweise fabrikseitig bei erstmaliger Bestückung des Gerätes mit Leiterplatten programmiert werden. Bei fachmännischer Wartung des Gerätes, die evtl. einen Austausch einer Leiterplatte umfasst, kann der Erwartungswert erneut programmiert werden.

Um den Kopierschutz zu verbessern, sind die das Netzwerk bildenden Komponenten vorzugsweise auf der Leiterplatte "versteckt". Dies kann beispielsweise dadurch erfolgen, dass sie in inneren Schichten der Leiterplatte eingebettet sind.

Widerstände können in unauffälliger Weise z.B. durch lange, sehr dünne Leiterbahnen realisiert werden. Kapazitäten sind in einfacher Weise als voneinander beabstandeten Leiterflächen realisierbar. Aufgrund der weitverbreiteten Technik des "Flutens" unbenutzter Platinenbereiche, d.h. man lässt typischerweise in unbenutzten Platinenbereichen die Leiterschicht stehen, gibt es auf jeder Platine sehr viele Leiterflächen, so dass auch eine optische Analyse der Leiterplatine, beispielsweise durch Röntgenstrahlung, keinen Aufschluss über versteckte Kapazitäten liefert.

Erfindungsgemäß ist vorgesehen, dass der hinterlegte Erwartungswert verschieden ist von einem Signalanalyseergebnis, das aus einer Durchführung der oben genannten Schritte a) bis c) an einer isolierten Leiterplatte resultiert. Mit anderen Worten bedeutet das, dass ein in Einbaulage an der zu testenden Leiterplatte durchgeführter Test zu einem anderen (und in dem hinterlegten Erwartungswert repräsentierten) Signalanalyseergebnis führt, als derselbe Test, der an der vom Gerät getrennten Platine durchgeführt wird. Dies kann dadurch erreicht werden, dass wenigstens eines der Elemente des herkunftsspezifischen oder leiterplattenindividuellen Netzwerks auf der Leiterplatte in Einbaulage in dem elektronischen Gerät mit Geräte- und/oder Einbaukomponenten wechselwirkt, so dass sein Kapazitätswert bzw. sein Induktivitätswert bzw. sein Widerstandswert in Einbaulage verschieden ist von seinem Kapazitätswert bzw. seinem Induktivitätswert bzw. seinem widerstandswert im ausgebauten Zustand. Als Einbaukomponenten werden hier solche Komponenten bezeichnet, die beim Einbau der Leiterplatten in das elektronische Gerät wirksam werden. Es können dies beispielsweise Klemmkontakte, Schrauben oder andere Befestigungsstifte etc. sein. Als Gerätekomponenten werden hier solche Komponenten bezeichnet, die geräteseitig positioniert sind und nicht vorrangig dem Einbau der Leiterplatte dienen. Solche Gerätekomponenten können z.B. auch auf anderen in das Gerät eingebauten Leiterplatten positioniert sein. Als mögliche Gerätekomponenten kommen z.B. in einem Gehäuse des Geräts eingegossene Leiterflächen zur Vervollständigung einer Kapazität, Spulen zur Hinzufügung einer Induktivität, Widerstände oder Überbrückungsdrähte zur in Frage. Auf diese Weise beeinflussen platinenexterne Komponenten die Übertragungsfunktion des elektrischen Netzwerks. Ein entsprechender Erwartungswert wird im Speicher der Steuereinheit hinterlegt. Ein Nachahmer, der eine derartige Platine einem aufwendigen Analyseverfahren unterwirft, wird dies stets an einer isolierten Platine tun. Gelingt es ihm, eine nachgeahmte Leiterplatte zu schaffen, die zwischen allen Ein- und Ausgangskontaktpaaren identische Übertragungsfunktionen wie die Originalplatine zeigt, kann er dennoch das erfindungsgemäße Testverfahren nicht überwinden, da er aus der funktionellen Analyse nicht auf die ganz spezielle räumliche Anordnung aller Komponenten des Netzwerks schließen kann, die jedoch für die Wechselwirkung mit den geräteseitigen Komponenten und somit für die Testrelevante Übertragungsfunktion wesentlich ist.

Erfindungsgemäß ist vorgesehen, dass als induktiv wirkendes Element ein Leiterdraht zu einer Spule um einen Durchbruch in der Leiterplatte geschlungen ist, der in Einbaulage von einem ferromagnetischen Dorn des elektronischen Gerätes oder einem ferromagnetischen Befestigungsstift durchsetzt ist. Dies bedeutet, dass der Induktivitätswert dieser Spule im Einbauzustand, d.h. mit ferromagnetischem Spulenkern, deutlich verschieden ist von dem Induktivitätswert im ausgebauten zustand. Entsprechend ändert sich die Übertragungsfunktion des Netzwerks.

Weiter kann vorgesehen sein, dass als zusätzliches, kapazitiv wirkendes Element eine Leiterfläche in Einbaulage mit einer korrespondierenden, geräteseitigen Leiterfläche, die im Einbauzustand über ein Kontaktelement mit der elektrischen Schaltung verbunden ist, einen Kondensator bildet. Hier wird der Nachahmer bei der Analyse der isolierten Leiterplatte die platinenseitige Leiterfläche lediglich als Element hohen Ohmschen Widerstandes analysieren. Im Einbauzustand wirkt diese Leiterfläche jedoch kapazitiv, da sie mit der korrespondierenden, geräteseitigen Leiterfläche einen Kondensator bildet. Entsprechend ändert sich die Übertragungsfunktion des Netzwerks.

Schließlich kann bei einer alternativ oder zusätzlich einsetzbaren Variante vorgesehen sein, dass die elektrische Schaltung wenigstens zwei getrennte Teilschaltungen umfasst, die in Einbaulage in dem elektronischen Gerät durch Wechselwirkung mit einer oder mehreren Geräte- und/oder Einbaukomponenten elektrisch leitend verbunden sind. Jeder Versuch einer funktionellen Analyse einer derartigen Leiterplatte wird höchstens zu der Erkenntnis der Übertragungsfunktion bzw. Impulsantwort jeder einzelnen Teilschaltungen führen. Erst im Einbauzustand werden die beiden Teilschaltungen zu einem Gesamtnetzwerk verbunden, welches eine völlig andere Übertragungsfunktion bzw. Impulsantwort zeigt, die insbesondere nicht als Linearkombination der Übertragungsfunktionen bzw. Impulsantworten der Teilschaltungen dargestellt werden kann. Der wesentliche Vorteil der vorliegenden Erfindung liegt darin, dass eine kopierte Leiterplatte von dem Gerät selbst als solche erkannt wird, was zu einem Abbruch des Gerätebetriebes führt. Andererseits ist selbst eine im isolierten zustand funktional identische Kopie der Leiterplatte nicht hinreichend, um den Kopierschutz zu überwinden. Vielmehr müssen auch entscheidende räumliche Besonderheiten berücksichtigt werden, welche räumlichen Besonderheiten jedoch für den Kopierschutz von Relevanz sind, kann ein Nachahmer nicht erkennen. Er wäre somit gezwungen, die Leiterplatte in sämtlichen räumlichen Details identisch zu kopieren. Der für eine derartige Analyse erforderliche Aufwand, der einen mikroschichtweisen Abtrag einer großflächigen Leiterplatte erfordern würde, übersteigt die Möglichkeiten und Fähigkeiten typischer Nachahmer.

Weitere Merkmale und Vorteile der vorliegenden Erfindung ergeben sich aus der nachfolgenden ausführlichen Beschreibung und den Zeichnungen.

### Kurzbeschreibung der Zeichnungen

In den Zeichnungen zeigen:
- Figur 1:: eine schematische Darstellung des erfindungsgemäßen Verfahrens,
- Figur 2:: eine schematische, ausschnittsweise Querschnittsdarstellung einer erfindungsgemäßen Leiterplatte,
- Figur 3:: eine schematische Darstellung einer bevorzugten Ausführungsform einer Induktivität einer erfindungsgemäßen Leiterplatte,
- Figur 4:: eine schematische Darstellung einer bevorzugten Ausführungsform einer Kapazität auf einer erfindungsgemäßen Leiterplatte und
- Figur 5:: eine schematische Darstellung einer bevorzugten Ausführungsform eines aus Teilnetzwerken zusammengesetzten elektrischen Netzwerks auf einer erfindungsgemäßen Leiterplatte.

### Beschreibung bevorzugter Ausführungsformen

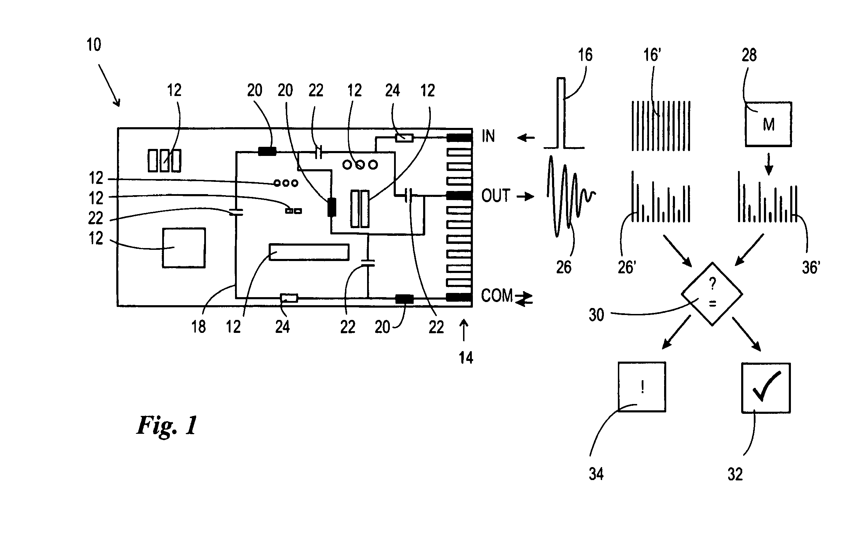

Figur 1 zeigt eine schematische Darstellung des erfindungsgemäßen Kopierschutzes für Leiterplatten. Dargestellt ist in stark schematischer Vereinfachung eine Leiterplatte 10 mit verschiedenen aktiven Bestückungselementen 12, deren interne Verdrahtung in Figur 1 nicht dargestellt ist. Die Leiterplatte 10 weist eine Vielzahl von Anschlüssen 14 auf, an denen sie in Einbaulage von korrespondierenden Kontakten eines elektronischen Gerätes kontaktiert wird. Drei der Anschlüsse, nämlich IN, OUT und COM, sind in Figur besonders hervorgehoben. Der Anschluss IN bildet mit dem Anschluss COM ein Paar von Eingangsanschlüssen für ein Testsignal 16, welches von einer nicht näher dargestellten Steuereinheit während des bestimmungsgemäßen Betriebs des ebenfalls nicht näher dargestellten elektronischen Gerätes, in welches die Leiterplatte 10 eingebaut ist, zu einem vorgegebenen Zeitpunkt angelegt wird. Bei der gezeigten Ausführungsform ist das Testsignal 16 ein Impulssignal. Alternativ können auch vorzugsweise hochfrequente Wechselspannungssignale einer vorgegebenen Frequenz oder einer vorgegebenen Folge von Frequenzen eingespeist werden. Das Eingangsanschlusspaar IN/COM ist mit einem Netzwerk 18 gekoppelt, welches verschiedene passive elektrische Bauelemente umfasst. Rein beispielhaft sind in Figur 1 drei Induktivitäten 20, vier Kapazitäten 22 und zwei Ohmsche Widerstände 24 dargestellt. Die genaue Anzahl der passiven elektrischen Bauelemente sowie ihre konkreten Werte, d.h. Kapazitätwert, Induktivitätswert bzw. Ohmscher Widerstandswert, sind ebenso wie die konkrete Anordnung auf der Platine relativ zueinander für die vorliegende Erfindung nicht relevant. Vielmehr liegt die Stärke der vorliegenden Erfindung in der nahezu unbegrenzten Variabilität der Gestaltungsmöglichkeiten, die eine herkunftsspezifische oder sogar platinenindividuelle Codierung durch das Netzwerk passiver elektrischer Komponenten erlauben.

Die Anschlüsse OUT und COM bilden gemeinsam ein Paar von Ausgangsanschlüssen, an denen ein Antwortsignal 26 des Netzwerks 18 abgegriffen werden kann. Das Antwortsignal 26 ist abhängig von dem Eingangsignal 16 und der Charakteristik des Netzwerks 18. Rein der Illustration halber sind in Figur 1 ein schematisches Spektrum 16' des Eingangssignals 16 sowie ein Spektrum 26' des Ausgangssignals 26 dargestellt. Die Darstellung dient nur dem Zweck zu veranschaulichen, dass durch das Netzwerk 18 ein an dem Eingangsanschlusspaar IN/COM eingebrachtes Signal eine charakteristische Verränderung erfährt, die zu dem Ausgangssignal 26 führt, das am Ausgangsanschlusspaar OUT/COM abgegriffen wird.

Die Steuereinheit führt eine Analyse des Ausgangssignals 26 durch, die beispielsweise eine Spektralanalyse umfassen kann. Das Ergebnis der Analyse wird mit einem Erwartungswert, der im gezeigten Ausführungsbeispiel als Spektrum 36' in einem Speicher 28 der Steuereinheit hinterlegt ist, verglichen (Entscheidungsblock 34).

Entspricht das Signalanalyseergebnis, z.B. das Spektrum 26', dem Erwartungswert, z.B. dem hinterlegten Spektrum 36' innerhalb vorab spezifizierter Toleranzen, läuft der Betrieb des elektronischen Gerätes normal weiter (Ergebnisblock 32). Weicht das Signalanalyseergebnis 26' wesentlich von dem Erwartungswert 36' ab, wird der Weiterbetrieb des elektronischen Gerätes wenigstens teilweise unterbunden (Ereignisblock 34).

Um die Kopierbarkeit der Leiterplatte 10 zu erschweren, sind die Komponenten des Netzwerkes 18 nicht in der offensichtlichen Weise, wie in Figur 1 schematisch dargestellt, auf der Platine 10 aufgebracht. Vielmehr sind die Komponenten versteckt angeordnet.

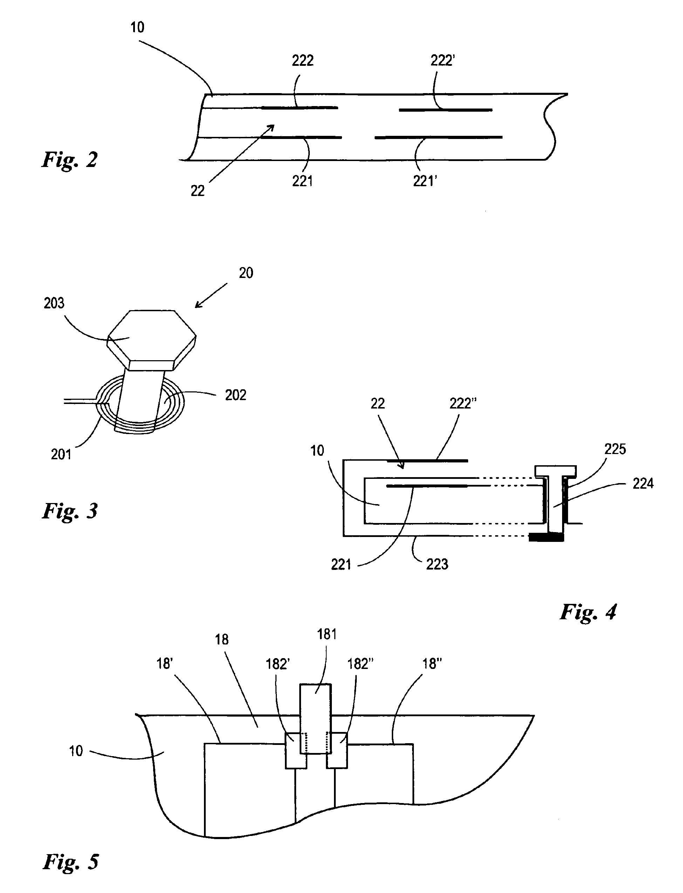

Figur 2 zeigt ein Beispiel der versteckten Anordnung einer Kapazität 22, bestehend aus zwei Leiterflächen 221, 222, die in den als Dielektrikum wirkenden Kunststoff der Leiterplatte 10 eingebettet sind. Die zusätzliche Anordnung weiterer Leiterflächen 221', 222', die ihrerseits nicht Bestandteil des Netzwerkes 18 sind, trägt zur erschwerten Analysierbarkeit der Platine 7.0 bei. Derartige nicht zum Netzwerk 18 gehörige Leiterflächen 221, 222 entstehen vielfach durch "Fluten" nicht benötigter Platinenfläche und somit ohne Mehrkosten bei der gewöhnlichen Platinenherstellung.

Figur 3 zeigt eine besonders vorteilhafte Ausgestaltung einer Induktivität 20 als Bestandteil des Netzwerkes 18. Die Induktivität 20 besteht aus einem Leiter 201, der spulenförmig um einen Durchbruch 202 der Platine geschlungen ist. Der Durchbruch 202 dient dem Durchgriff eines Befestigungsbolzens 203, mit dem die Platine 10 in das elektronische Gerät eingebaut wird. Der Befestigungsbolzen 203 ist bevorzugt aus einem ferromagnetischen Material, so dass sein Vorhandensein oder Fehlen als Spulenkern einen wesentlichen Unterschied im Induktivitätswert der Induktivität 20 ausmacht.

Figur 4 zeigt eine bevorzugte Ausführungsform einer Kapazität 22 des Netzwerks 18. Die Kapazität 22 besteht aus den Leiterfläche 221, 222". Eine erste Leiterfläche 221 ist Bestandteil der Platine 10. Die zweite Leiterfläche 222" hingegen ist Bestandteil des elektronischen Gerätes, in welches die Platine 10 eingebaut wird. Eine elektrische Verbindung der geräteseitigen Leiterfläche 222" zu dem Rest des Netzwerks 18 erfolgt über einen in dem elektronischen Gerät geführten Verbindungsdraht 223, der mit einem elektrisch leitenden Befestigungsbolzen 224 verbunden ist, der seinerseits den Rest des Netzwerks 18 über einen elektrisch leitend beschichteten Durchbruch 225 der Platine 10 kontaktiert. Der Durchbruch 225 steht mit dem Rest des Netzwerks 18 in elektrisch leitender Verbindung. Auf diese Weise wird erreicht, dass die Kapazität 22 nur in Einbaulage der Platine 10 als Kapazität wirkt. In der isolierten Platine stellt sie lediglich einen Bereich hohen Ohmschen Widerstandes dar.

Figur 5 zeigt eine Variante des Netzwerks 18, die aus zwei Teilnetzwerken 18' und 18" besteht. In Einbaulage werden die Teilnetzwerke 18', 18" mittels eines Klemmkontaktes 181 des elektronischen Gerätes, in welches die Platine 10 eingebaut wird, verbunden, indem der Klemmkontakt 181 zwei Kontaktfläche 182' und 182", die jeweils Bestandteile der Teilnetzwerke 18', 18" sind, elektrisch leitend kontaktiert. Auf diese Weise wird erreicht, dass das Netzwerk 18 in Einbaulage eine völlig andere Impulsantwort bzw. Übertragungsfunktion zeigt als im isolierten Zustand.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere ist die konkrete Gestaltung der Übertragungsfunktion oder Impulsantwort des Netzwerks 18, die das Ergebnis der konkreten Ausführung und Anordnung der Komponenten des Netzwerks 18 ist, im Wesentlichen frei wählbar. Auch die Konsequenzen, die sich aus der Erkennung einer Nicht-Originalplatine aufgrund des erfindungsgemäßen Verfahrens ergeben, können in weiten Bereichen an die Anforderung des Einzelfalls angepasst werden. Insbesondere kann ein Totalabbruch des Betriebs des elektronischen Gerätes oder ein Teilabbruch, der auch Vorwarnungen vor einem späteren Total- oder weiteren Teilabbruch umfassen kann, durch geeignete Softwarelösungen realisiert werden.

### Bezugszeichenliste

- 10: Leiterplatte
- 12: Bestückung von 10
- 14: Anschlüsse von 10
- 16: Testsignal
- 16': Spektrum von 16
- 18: elektrisches Netzwerk
- 181: Klemmkontakt
- 18': Teilnetzwerk von 18
- 182': Kontaktfläche von 18'
- 18": Teilnetzwerk von 18
- 182": Kontaktfläche von 18"
- 20: Induktivität
- 201: Leiterdraht
- 202: Durchbruch
- 203: Befestigungsbolzen
- 22: Kapazität
- 221: erste Leiterfläche von 22
- 221': Tarnfläche
- 222: zweite Leiterfläche von 22
- 222': Tarnfläche
- 222": geräteseitige zweite Leiterfläche von 22
- 223: Leitdraht
- 224: Befestigungsbolzen
- 225: leitender Durchbruch
- 24: ohmscher Widerstand
- 26: Antwortsignal
- 26': Spektrum von 26
- 28: Speicher
- 30: Entscheidungsblock
- 32: Ereignisblock
- 34: Ereignisblock
- 36': Erwartungswert

## Patentansprüche

1. Elektronisches Gerät, umfassend
- eine Leiterplatte (10), die einen Satz von Eingangskontakten (IN/COM), einen Satz von Ausgangskontakten (OUT/COM) und eine zwischen den Eingangskontakten (IN/COM) einerseits und den Ausgangskontakten (OUT/COM) andererseits angeschlossene, elektrische Schaltung (18) aufweist, sowie
- einen ferromagnetischen Dorn oder einen ferromagnetischen Befestigungsstift (203) und
- eine Steuereinheit zur Erkennung einer nicht-originalen Leiterplatte,
wobei die Steuereinheit eingerichtet ist, wenigstens einmal während des bestimmungsgemäßen Betriebs des Gerätes
- ein vorgegebenes, als ein Impulssignal, als ein wechselspannungssignal mit einer vorgegebenen Frequenz oder als ein Wechselspannungssignal mit einer Abfolge vorgegebener Frequenzen ausgestaltetes Testsignal (16) an dem Satz von Eingangskontakten (IN/COM) anzulegen,
- ein Antwortsignal (26) an dem Satz von Ausgangskontakten (OUT/COM) abzugreifen,
- eine Signalanalyse des Antwortsignals (26) durchzuführen,
- ein Ergebnis (26') der Signalanalyse mit einem in einem Speicher (28) der Steuereinheit hinterlegten Erwartungswert (36') zu vergleichen und
- im Fall einer fehlenden Übereinstimmung des Signalanalyseergebnisses (26') mit dem Erwartungswert (36') einen weiteren Betrieb des Gerätes wenigstens teilweise zu deaktivieren oder nicht zu aktivieren, wobei die elektrische Schaltung (18) als ein passives, eine charakteristische Übertragungsfunktion aufweisendes Netzwerk mit wenigstens einem induktiv wirkenden Element ausgebildet ist, wobei als induktiv wirkendes Element ein Leiterdraht (201) zu einer Spule um einen Durchbruch (202) in der Leiterplatte (10) geschlungen ist, der in Einbaulage von dem ferromagnetischen Dorn des elektronischen Gerätes oder dem ferromagnetischen Befestigungsstift (203) durchsetzt ist, sodass der Induktivitätswert des induktiv wirkenden Elementes in Einbaulage verschieden ist von seinem Induktivitätswert im ausgebauten Zustand und dieser über die Übertragungsfunktion des passiven Netzwerks das Signalanalyseergebnis beeinflusst.

2. Elektronisches Gerät nach Anspruch 1
**dadurch gekennzeichnet,**
**dass** das passive, herkunftsspezifische oder leiterplattenindividuelle Netzwerk weiter wenigstens ein kapazitiv wirkendes Element (22)aufweist, wobei als kapazitiv wirkendes Element eine Leiterfläche (221) in Einbaulage mit einer korrespondierenden, geräteseitigen Leiterfläche (222"), die im Einbauzustand über ein Kontaktelement mit der elektrischen Schaltung (18) verbunden ist, einen Kondensator bildet, sodass der Kapazitätswert des kapazitiv wirkenden Elementes in Einbaulage verschieden ist von seinem Kapazitätswert im ausgebauten Zustand.

3. Elektronisches Gerät nach einem der vorangehenden Ansprüche,
**dadurch gekennzeichnet,**
**dass** die elektrische Schaltung (18) wenigstens zwei getrennte Teilschaltungen (18', 18") umfasst, die in Einbaulage durch Wechselwirkung mit einer oder mehreren Geräte- und oder Einbaukomponenten (181) elektrisch leitend verbunden sind.

4. Verfahren zur Erkennung einer nicht-originalen Leiterplatte (10), die einen Satz von Eingangskontakten (IN, COM), einen Satz von Ausgangskontakten (OUT/COM) und eine zwischen den Eingangskontakten (IN/COM) einerseits und den Ausgangskontakten (OUT/COM) andererseits angeschlossene, elektrische Schaltung (19) aufweist, umfassend die Schritte:
a) Anlegen eines vorgegebenen, als ein Impulssignal, als ein Wechselspannungssignal mit einer vorgegebenen Frequenz oder als ein Wechselspannungssignal mit einer Abfolge vorgegebener Frequenzen ausgestalteten Testsignals (16) an dem Satz von Eingangskontakten (IN/COM),
b) Abgreifen eines Antwortsignals (26) an dem Satz von Ausgangskontakten (OUT/COM),
c) Durchführen einer Signalanalyse des Antwortsignal (26),
wobei eine Steuereinheit vorgesehen ist, die
- die Schritte a bis c wenigstens einmal während des bestimmungsgemäßen Betriebs eines elektronischen Gerätes, dessen Bestandteile die Steuereinheit, die Leiterplatte (10) und ein ferromagnetischer Dorn oder ein ferromagnetischer Befestigungsstift (203) sind, durchführt,
- ein Ergebnis (26') der Signalanalyse mit einem in einem Speicher (28) der Steuereinheit hinterlegten Erwartungswert (36') vergleicht und
- im Fall einer fehlenden Übereinstimmung des Signalanalyseergebnisses (26') mit dem Erwartungswert (36') einen weiteren Betrieb des elektronischen Gerätes wenigstens teilweise deaktiviert oder nicht aktiviert,
wobei die elektrische Schaltung (18) als ein passives, eine charakteristische Übertragungsfunktion aufweisendes Netzwerk mit wenigstens einem induktiv wirkenden Element ausgebildet ist, wobei als induktiv wirkendes Element ein Leiterdraht (201) zu einer Spule um einen Durchbruch (202) in der Leiterplatte (10) geschlungen ist, der in Einbaulage von dem ferromagnetischen Dorn des elektronischen Gerätes oder dem ferromagnetischen Befestigungsstift (203) durchsetzt ist, sodass der Induktivitätswert des induktiv wirkenden Elementes in Einbaulage verschieden ist von seinem Induktivitätswert im ausgebauten Zustand und dieser über die Übertragungsfunktion des passiven Netzwerks das Signalanalyseergebnis beeinflusst.

## Claims

1. An electronic device, comprising
- a circuit board (10) having a set of input contacts (IN/COM), a set of output contacts (OUT/COM), and an electrical circuit (18) connected between the input contacts (IN/COM) on the one hand and the output contacts (OUT/COM) on the other hand, and
- a ferromagnetic rod or a ferromagnetic fastening pin (203), and
- a controller for detecting a non-original circuit board,
where the controller is configured in order to, at least once during the intended operation of the device,
- apply a predetermined test signal (16) in the form of a pulsed signal, of an alternating current signal with a predetermined frequency, or of an alternating current signal with a sequence of predetermined frequencies, to the set of input contacts (IN/COM),
- tap off a response signal (26) at the set of output contacts (OUT/COM),
- perform a signal analysis of the response signal (26)
- compare a result (26') of the signal analysis with an expected value (36') stored in a memory (28) of the controller and
- deactivate at least partially, or not to activate, further operation of the device if no match is determined between the signal analysis result (26') and the expected value (36'),
where the electrical circuit (18) is configured as a passive network having a characteristic transfer function and comprising at least one inductive element, where the inductive element is a conducting wire (201) looped into a coil around a cut-out (202) in the circuit board (10), through which passes, in an installed condition, the ferromagnetic rod of the electronic device or the ferromagnetic fastening pin (203), so that the inductance value of the inductive element in the installed condition differs from its inductance value in the uninstalled condition, and this inductance value influences the result of the signal analysis via the transfer function of the passive network.

2. An electronic device according to Claim 1,
**characterized in that**
the passive network, which is origin-specific or unique to the circuit board, further possesses at least one capacitive element (22), where in the installed condition a conductor surface (221), acting as the capacitive element, forms a capacitor together with a corresponding device-side conductor surface (222") that in the installed condition is connected to the electrical circuit (18) via a contact element, so that the capacitance value of the capacitive element in the installed condition is different from its capacitance value in the uninstalled condition.

3. An electronic device according any of the preceding claims,
**characterized in that**
the electrical circuit (18) comprises at least two separate partial circuits (18', 18") that, in the installed condition, are conductively connected by interaction with one or more device components and/or installation components (181).

4. A method for detecting a non-original circuit board (10) that possesses a set of input contacts (IN, COM), a set of output contacts (OUT/COM), and an electrical circuit (19) that is connected between the input contacts (IN/COM) on the one hand and the output contacts (OUT/COM) on the other hand, comprising the following steps:
a) applying a predetermined test signal (16) in the form of a pulsed signal, of an alternating current signal with a predetermined frequency, or of an alternating current signal with a sequence of predetermined frequencies, to the set of input contacts (IN/COM),
b) tapping off a response signal (26) at the set of output contacts (OUT/COM),
c) performing a signal analysis of the response signal (26),
where a controller is provided that
- performs the steps a to c at least once during the intended operation of an electronic device, the components of which comprise the controller, the circuit board (10) and a ferromagnetic rod or a ferromagnetic fastening pin (203),
- compares a result (26') of the signal analysis with an expected value (36') stored in a memory (28) of the controller and
- deactivates at least partially, or does not activate, further operation of the electronic device if no match is determined between the signal analysis result (26') and the expected value (36'),
where the electrical circuit (18) is configured as a passive network having a characteristic transfer function and comprising at least one inductive element, where the inductive element is a conducting wire (201) looped into a coil around a cut-out (202) in the circuit board (10), through which passes, in an installed condition, the ferromagnetic rod of the electronic device or the ferromagnetic fastening pin (203), so that the inductance value of the inductive element in the installed condition differs from its inductance value in the uninstalled condition, and this inductance value influences the result of the signal analysis via the transfer function of the passive network.

## Revendications

1. Un dispositif électronique composé de ce qui suit :
- une carte de circuits imprimés (10) comprenant un ensemble de contacts d'entrée (IN/COM), un ensemble de contacts de sortie (OUT/COM) et un circuit électrique (18) connecté entre les contacts d'entrée (IN/COM) d'une part et les contacts de sortie (OUT/COM) d'autre part
ainsi qu'une
- tige ferromagnétique ou une broche de fixation ferromagnétique (203) et
- un contrôleur pour détecter une carte de circuits imprimés autre que celle d'origine
où le contrôleur est configuré pour, au moins une fois pendant l'exécution prévue du dispositif,
- appliquer un signal de test prédéterminé (16) sous la forme d'un signal d'impulsion, d'un signal de courant alternatif dont la fréquence est prédéterminée ou d'un signal de courant alternatif avec séquence de fréquences prédéterminées, vers l'ensemble de contacts d'entrée (IN/COM),
- capter un signal de réponse (26) au niveau de l'ensemble de contacts de sorties (OUT/COM),
- effectuer une analyse du signal de réponse (26)
- comparer un résultat (26') de l'analyse de signal à une valeur attendue (36') stockée dans une mémoire (28) du contrôleur et
- désactiver au moins partiellement, ou ne pas activer, d'autres opérations du dispositif si une non-concordance est déterminée entre le résultat de l'analyse du signal (26') et la valeur attendue (36'),
où le circuit électrique (18) est configuré comme un réseau passif doté d'une fonction de transfert caractéristique et composé d'au moins un élément inductif, où l'élément conducteur est un fil conducteur (201) embobiné autour d'une découpe (202) dans la carte de circuits imprimés (10), à travers laquelle passe, lorsqu'elle est installée, la tige ferromagnétique du dispositif électronique ou la broche de fixation ferromagnétique (203), de façon que la valeur d'inductance de l'élément inductif lorsqu'il est installé, diffère de la valeur d'inductance de l'élément inductif lorsqu'il n'est pas installé, et que cette valeur d'inductance influence le résultat de l'analyse du signal via la fonction de transfert du réseau passif.

2. Un dispositif électronique selon la revendication 1,
**caractérisé en ce que**
le réseau passif, qui a une origine spécifique ou qui est unique pour la carte de circuits imprimés, possède également au moins un élément capacitif (22) dans lequel, lorsqu'il est installé, une surface conductrice (221) agissant en tant qu'élément capacitif forme un condensateur avec une surface conductrice correspondante (222") du côté du dispositif, laquelle, lorsqu'elle est installée, est branchée via un élément de contact au circuit électrique (18), de façon que la valeur de capacitance de l'élément de capacitance lorsqu'il est installé soit différente de la valeur de capacitance lorsqu'il n'est pas installé.

3. Un dispositif électronique selon une quelconque des revendications stipulées ci-dessus,
**caractérisé en ce que**
le circuit électrique (18) comporte au moins deux circuits partiels distincts (18', 18") qui, lorsqu'ils sont installés, sont reliés de façon conductrice par interaction avec un ou plusieurs composants de dispositif et/ou d'installation (181).

4. Une méthode de détection d'une carte de circuits imprimés autre que celle d'origine (10) qui possède un ensemble de contacts d'entrée (IN/COM), un ensemble de contacts de sortie (OUT/COM) et un circuit électrique (19) branché entre les contacts d'entrée (IN/COM) d'une part et les contacts de sortie (OUT/COM) d'autre part, et comprenant les étapes suivantes :
a) application d'un signal de test prédéterminé (16) sous la forme d'un signal d'impulsion, d'un signal de courant alternatif dont la fréquence est prédéterminée ou d'un signal de courant alternatif avec séquence de fréquences prédéterminées, à l'ensemble de contacts d'entrée (IN/COM),
b) captage d'un signal de réponse (26) au niveau de l'ensemble de contacts de sorties (OUT/COM),
c) exécution d'une analyse du signal de réponse (26),
où un contrôleur est fourni pour
- exécuter les étapes a à c au moins une fois pendant l'opération prévue d'un dispositif électronique dont les composants incluent le contrôleur, la carte de circuits imprimés (10) et une tige ferromagnétique ou une broche de fixation ferromagnétique (203),
- comparer un résultat (26') de l'analyse de signal à une valeur attendue (36') stockée dans une mémoire (28) du contrôleur et
- désactiver au moins partiellement, ou ne pas activer, d'autres opérations du dispositif électronique si une non-concordance est déterminée entre le résultat de l'analyse du signal (26') et la valeur attendue (36'),
où le circuit électrique (18) est configuré comme un réseau passif doté d'une fonction de transfert caractéristique et composé d'au moins un élément inductif, où l'élément inductif est un fil conducteur (201) embobiné autour d'une découpe (202) dans la carte de circuits imprimés (10), à travers laquelle passe, à l'état installé, la tige ferromagnétique du dispositif électronique ou la broche de fixation ferromagnétique (203), de façon que la valeur d'inductance de l'élément conducteur, lorsqu'il est installé, diffère de la valeur d'inductance de l'élément inductif, lorsqu'il n'est pas installé, et que cette valeur d'inductance influence le résultat de l'analyse du signal via la fonction de transfert du réseau passif.
